# EUROPÄISCHE PATENTSCHRIFT

(11) **EP 3 176 380 B1**
(45) Veröffentlichungstag und Bekanntmachung des Hinweises auf die Patenterteilung: **08.04.2020**
(21) Anmeldenummer: 16201366.8
(22) Anmeldetag: 30.11.2016
(51) Int. Cl.: F01D 11/00, F01D 11/02

(54) **STABILISIERTER DICHTRING FÜR EINE STRÖMUNGSMASCHINE**
STABILIZED SEALING RING FOR A TURBOMACHINE
BAGUE D'ÉTANCHÉITÉ STABILISÉE POUR UNE TURBOMACHINE

(30) Priorität: 04.12.2015 DE 102015224379
(43) Veröffentlichungstag der Anmeldung: 07.06.2017
(73) Patentinhaber: MTU Aero Engines AG, 80995 München (DE)
(72) Erfinder: Schlemmer, Markus, 84048 Mainburg / Sandelzhausen (DE); Liebscher, Otto, 85604 Zorneding (DE); Thiele, Oliver, 85221 Dachau (DE)

(56) Entgegenhaltungen:
- EP-A1- 2 846 067
- WO-A1-2014/122371
- DE-A1-102008 002 862
- US-A- 5 215 435
- US-A1- 2015 040 567

## Beschreibung

Die vorliegende Erfindung betrifft einen Dichtring für eine Strömungsmaschine, eine Dichtung für eine Strömungsmaschine, eine Strömungsmaschine und ein Verfahren zum Herstellen eines Dichtrings für eine Strömungsmaschine.

Strömungsmaschinen (wie z.B. Flugtriebwerke und stationäre Gasturbinen) weisen einen Rotor mit einer Mehrzahl an Laufschaufeln sowie einen Leitschaufelkranz bzw. einer Leitschaufelreihe mit einer Mehrzahl von Leitschaufeln auf. Die Leitschaufeln dienen einer Optimierung der Strömungsbedingungen für die Laufschaufeln; in Hauptstromrichtung sind Leitschaufeln und Laufschaufeln hintereinander angeordnet.

Um einen Bereich zwischen Leitschaufeln und Rotor radial innen von dem Strömungskanal abzudichten, werden gemeinhin Dichtungen an den (bezogen auf die Rotationsachse) radial innenliegenden Enden der Leitschaufeln oder von Leitschaufelsegmenten befestigt; für diese Dichtungen sind in der Fachsprache auch die englischen Bezeichnungen "Inner Air Seal (IAS)" bzw. "Static Inner Air Seal (SIAS)" gebräuchlich. Eine derartige Dichtung kann beispielsweise einen Bürsten- oder Einlaufbelagdichtring (z. B. eine Honigwabendichtung) umfassen, welcher der Rotorwelle zugewandt an den Leitschaufeln oder den Leitschaufelsegmenten angeordnet sein kann. Vorzugsweise erfolgt die Befestigung so, dass die Dichtung in radialer Richtung relativ zu den Leitschaufeln bzw. Leitschaufelsegmenten verschieblich, insbesondere an diesen speichenzentriert gelagert, ist; auf diese Weise können den unterschiedlichen thermischen Ausdehnungen im Betrieb der Strömungsmaschine zwischen einem aus den Leitschaufeln bzw. den Leitschaufelsegmenten gebildeten Leitschaufelring und dem Bürsten- oder Einlaufbelagdichtring konstruktiv Rechnung getragen werden. Derartige Dichtungen sind beispielsweise in den Druckschriften DE 196 28 559 A1 und DE 101 22 732 A1 offenbart.

Neben dem Bürsten- oder Einlaufbelagdichtring können die Dichtungen radial weiter außen mindestens einen Dichtring aufweisen, der jeweils einem axial benachbarten Laufschaufelring zugewandt ist und eine radiale Strömung zwischen Leit- und Laufschaufeln reduziert. Dichtelemente zum Reduzieren von Leckageströmungen aus einem Heißgaskanal sind beispielsweise aus den Dokumenten DE102008002862A1, US20150040567A1, US5215435A und WO2014122371A1 bekannt.

Die vorliegende Erfindung hat die Aufgabe, eine Technik bereitzustellen, mit der Dichtungen in Strömungsmaschinen verbessert werden können.

Die Aufgabe wird gelöst durch einen Dichtring gemäß Anspruch 1, eine Dichtung gemäß Anspruch 5, eine Strömungsmaschine gemäß Anspruch 6 und ein Verfahren zum Herstellen eines Dichtrings gemäß Anspruch 10. Vorteilhafte Ausführungsformen sind in den Unteransprüchen, der Beschreibung und den Figuren offenbart.

Ein erfindungsgemäßer Dichtring für eine Strömungsmaschine ist dazu eingerichtet, an einem radial inneren Bereich einer Mehrzahl von Leitschaufeln so befestigt zu werden, dass er eine Rotorwelle umläuft. Der Dichtring umfasst einen sich im Wesentlichen in axialer Richtung erstreckenden Ringteil, der eine Mehrzahl an in Umfangsrichtung aufeinanderfolgenden Versteifungen aufweist. Der sich im Wesentlichen in axialer Richtung erstreckende Ringteil kann dabei mindestens einen zylindrischen und/oder mindestens einen im Wesentlichen konischen Abschnitt umfassen, wobei die Zylinder- bzw. Kegelachse jeweils vorzugsweise mit einer zentralen Achse des Dichtrings übereinstimmt.

Die Bezeichnungen "radial", "axial" und "Umfangsrichtung" beziehen dabei sich in dieser Schrift - sofern nichts anderes angegeben ist - stets auf eine zentrale Achse des Dichtrings; nach dessen Befestigung stimmt diese Achse vorzugsweise mit der Rotationsachse einer Rotorwelle der Strömungsmaschine überein.

Eine erfindungsgemäße Dichtung für eine Strömungsmaschine ist dazu eingerichtet, eine Rotorwelle umlaufend an einem radial inneren Bereich einer Mehrzahl von Leitschaufeln befestigt zu werden. Sie umfasst mindestens einen erfindungsgemäßen Dichtring gemäß einer der in dieser Schrift offenbarten Ausführungsformen sowie einen der Rotorwelle zuzuwendenden Bürsten- und/oder Einlaufbelagdichtring.

Eine Strömungsmaschine kann dementsprechend vorzugsweise eine Mehrzahl an Leitschaufeln sowie eine Rotorwelle mit einer Mehrzahl an Laufschaufeln aufweisen, wobei die Leitschaufeln radial um die Rotorwelle herum angeordnet sind. Jeweils in einem radial inneren Bereich der Leitschaufeln ist dabei vorzugsweise eine erfindungsgemäße Dichtung gemäß einer der in dieser Schrift offenbarten Ausführungsformen befestigt.

Ein erfindungsgemäßes Verfahren zum Herstellen eines Dichtrings umfasst ein Fertigen einer Rohform für den Dichtring mit mindestens einem (vorzugsweise sich radial erstreckenden) Befestigungsmittel (z.B. einem Befestigungsrand oder einer Mehrzahl an Befestigungsvorsprüngen) sowie einem sich in axialer Richtung erstreckenden Ringteil. Das Verfahren umfasst ferner ein Ausbilden einer Mehrzahl von Versteifungen in den sich in axialer Richtung erstreckenden Ringteil, wobei die Versteifungen in Umfangsrichtung aufeinanderfolgend angeordnet sind.

Die Versteifungen in dem sich in axialer Richtung erstreckenden Ringteil eines erfindungsgemäßen Dichtrings bieten den Vorteil einer erhöhten Steifigkeit des Dichtrings. Darüber kann mit ihnen eine vorteilhafte Verschiebung der Eigenfrequenzen in einen Bereich oberhalb störender Erregerfrequenzen bewirkt werden, so dass eine nachteilige Resonanz vermieden werden kann.

Ein erfindungsgemäßer Dichtring kann dazu eingerichtet sein, unmittelbar an der Mehrzahl an Leitschaufeln befestigt zu werden oder mittels einer weiteren Komponente, die ihrerseits an den Leitschaufeln befestigt werden kann (z.B. an deren Füßen). Eine derartige Komponente kann Teil einer Dichtung sein, die zudem weitere Elemente (z.B. einen Bürsten- oder Einlaufbelagdichtring) umfassen kann.

Für die Befestigung kann der Dichtring Befestigungsmittel, wie insbesondere einen vom sich in axialer Richtung erstreckenden Ringteil abgewinkelten, im Wesentlichen radial verlaufenden Befestigungsrand aufweisen, der auf je einen radialen Fortsatz der Leitschaufeln geschraubt oder mit ihm verklemmt werden kann. Die Befestigung des Dichtrings an den Leitschaufeln erfolgt dabei vorzugsweise jedoch nicht unmittelbar, sondern mittelbar über einen radialen Vorsprung des Bürsten- oder Einlaufbelagdichtrings. Der Bürsten- oder Einlaufbelagdichtring ist dabei vorzugsweise speichenzentriert an einem aus einer Vielzahl von Leitschaufeln gebildeten Leitschaufelkranz befestigt. Ein derartiger Befestigungsrand kann aus einer Mehrzahl von Flächenabschnitten gebildet sein, die jeweils vom sich in axialer Richtung erstreckenden Ringteil (in radialer Richtung) abgewinkelt sein können. Für die Befestigung kann der Befestigungsrand Einschnitte oder Löcher (z.B. Bohrungen) für Bolzen oder Schrauben aufweisen. Ein erfindungsgemäßes Verfahren kann ein Ausbilden derartiger Befestigungsmittel umfassen.

Der radial innen liegende Bereich der Leitschaufeln kann beispielsweise zwischen der Rotorwelle und einem Deckband angeordnet sein, das die Mehrzahl an Leitschaufeln zu einer Leitschaufelreihe miteinander verbindet. Der Dichtring kann dabei dazu eingerichtet sein, in Kontakt zum Deckband oder von diesem beabstandet befestigt zu werden. Insbesondere kann der radial innen liegende Bereich (an dem befestigt zu werden der Dichtring eingerichtet ist) einen radial inneren Fuß einer Leitschaufel umfassen.

Gemäß einer bevorzugten Ausfuhrungsform der vorliegenden Erfindung sind die Versteifungen gleichmäßig (also in regelmäßigen Abständen) über den Umfang des sich in axialer Richtung erstreckenden Ringteils verteilt (bzw. werden in dieser Weise ausgebildet). Damit weist der Dichtring eine gleichmäßige Stabilität auf, und es kann gezielt eine geeignete Eigenfrequenz eingerichtet werden.

Die Anzahl an Versteifungen an dem Ringteil kann vorzugsweise zwischen 15 und 30 liegen, noch vorteilhafter zwischen 18 und 24. Damit können eine geeignete Steifigkeit und damit Belastbarkeit des Dichtrings erzielt und zugleich ein unvorteilhaft großes Gewicht vermieden werden. Insbesondere können die Versteifungen so angeordnet sein, dass nach einer vorgesehenen Befestigung des Dichtrings zwischen je zwei Leitschaufeln eine Versteifung angeordnet ist. Je nach Größe der Strömungsmaschine können somit auch deutlich mehr als 30 Versteifungen an dem Ringteil vorgesehen sein, nämlich bis zu 60 oder sogar noch mehr.

Die Versteifungen können jeweils als radiale Senken (bzw. Sicken) oder als radiale Erhebungen ausgebildet sein. Ein erfindungsgemäßer Dichtring kann dabei Versteifungen verschiedener Typen (d.h. Senken und Erhebungen) aufweisen oder lediglich Versteifungen gleichen Typs (nur Senken oder nur Erhebungen). Gemäß einer vorteilhaften Variante eines erfindungsgemäßen Verfahrens werden entsprechend die Versteifungen als Senken geprägt oder als Erhebungen ausgeformt. Damit kann ein erfindungsgemäßer Dichtring der Geometrie der Leitschaufeln angepasst werden, zudem kann in geeigneter Weise eine günstige Eigenfrequenz eingerichtet werden.

Mindestens ein Teil der Versteifungen oder alle Versteifungen mindestens hat bzw. haben eine (in wenigstens eine Richtung) gekrümmte bzw. gewölbte Oberfläche. Insbesondere sind die Versteifungen jeweils im Wesentlichen entlang einer Kegelfläche und/oder einer Oberfläche eines Rotationsparaboloids ausgebildet. Eine zentrale Achse einer derartigen Kegelfläche bzw. eines Rotationsparaboloids kann dabei vorzugsweise in einer Ebene mit der zentralen Achse des Dichtrings oder sogar parallel zur zentralen Achse des Dichtrings verlaufen; gemäß einer vorteilhaften Ausführungsform eines erfindungsgemäßen Verfahrens werden die Versteifungen entsprechend ausgebildet. Derartige Formen sind strömungstechnisch besonders vorteilhaft, weil durch sie hervorgerufene Verwirbelungen des Hauptstroms in dem Bereich minimal sind. Besonders bevorzugt ist sind Ausführungsformen, bei denen sich die Versteifungen ausgehend von einem vorgesehenen Befestigungsmittel (zur Befestigung des Dichtrings) in axialer Richtung verjüngen. Vorteilhaft ist es dabei, dass ein freier Rand des Ringteils kreisförmig ausgebildet ist. Das heißt, dass die Versteifung, welche eine radiale Erhöhung (Ausdellung) oder eine radiale Vertiefung (Einbeulung) sein kann, sich in axialer Richtung nur so weit erstreckt, dass der freie Rand des Ringteils nicht betroffen ist. Auf diese Weise kann sichergestellt werden, dass ein Dichtspalt zwischen dem freien Rand des Ringteils und einem axialen Vorsprung einer axial benachbarten Laufschaufel bzw. Laufschaufelreihe oder -kranz über den gesamten Umfang im Wesentlichen identisch ist.

Ein Aspekt der vorliegenden Erfindung betrifft eine Strömungsmaschine mit einer Rotorwelle, einer Mehrzahl von Leitschaufeln, die zusammen einen Leitschaufelkranz einer Turbinen- oder Verdichterstufe bilden, und einer zuvor beschriebenen Dichtung, wobei die Dichtung zusammen mit dem mindestens einen Dichtring an dem radial inneren Bereich der Mehrzahl von Leitschaufeln befestigt ist. Die Befestigung ist dabei vorzugsweise derart ausgebildet, dass thermisch bedingte, unterschiedliche radiale Ausdehnungen zwischen dem Leitschaufelkranz und der Dichtung mit dem Dichtring kompensiert werden können. Hierzu kann eine speichenzentrierte Befestigung vorgesehen sein.

In einer vorteilhaften Ausbildung der Erfindung umfasst die Strömungsmaschine ferner einen dem Leitschaufelkranz axial benachbarten Laufschaufelkranz mit einer Mehrzahl von Laufschaufeln, wobei die Leitschaufeln jeweils eine radial innere Deckplatte umfassen und die Laufschaufeln jeweils an einem radial inneren Bereich einen axialen Vorsprung umfassen, welcher zu dem Leitschaufelkranz hinweist, wobei der sich in axialer Richtung erstreckende Ringteil des Dichtrings zusammen mit den radial inneren Deckplatten der Leitschaufeln und den axialen Vorsprüngen der Laufschaufeln eine Labyrinthdichtung bildet, die auch als "Fischmauldichtung" bezeichnet wird. Die Labyrinthdichtung dient dazu, eine Gasströmung in radialer Richtung im Bereich zwischen den jeweils radial inneren Enden der Leit- und Laufschaufeln zu reduzieren. Insbesondere dann, wenn die Leit- und Laufschaufeln Schaufeln einer Turbinenstufe der Strömungsmaschine sind, verhindert oder reduziert die Labyrinthdichtung einen Heißgaseinzug aus einem Heißgaskanal nach radial innen.

Vorzugsweise sind die axialen Vorsprünge der Laufschaufel hierzu in radialer Richtung zwischen den radial inneren Deckplatten der Leitschaufeln und dem Ringteil des Dichtrings angeordnet.

Besonders wirksam kann eine Reduzierung einer unerwünschten Gasströmung in radialer Richtung dann erfolgen, wenn der Leitschaufelkranz zwei Dichtringe umfasst, wobei einer der beiden Dichtringe eine zuvor beschriebene Labyrinthdichtung mit einem stromaufwärtigen Laufschaufelkranz und der andere der beiden Dichtringe eine entsprechende Labyrinthdichtung mit einem stromabwärtigen Laufschaufelkranz bildet.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: eine exemplarische Anordnung einer Laufschaufel und einer Leitschaufel mit einer daran befestigten Dichtung in einer Schnittdarstellung;
- Figur 2:: einen Abschnitt eines exemplarischen erfindungsgemäßen Dichtrings;
- Figur 3:: einen Abschnitt eines alternativen exemplarischen erfindungsgemäßen Dichtrings.

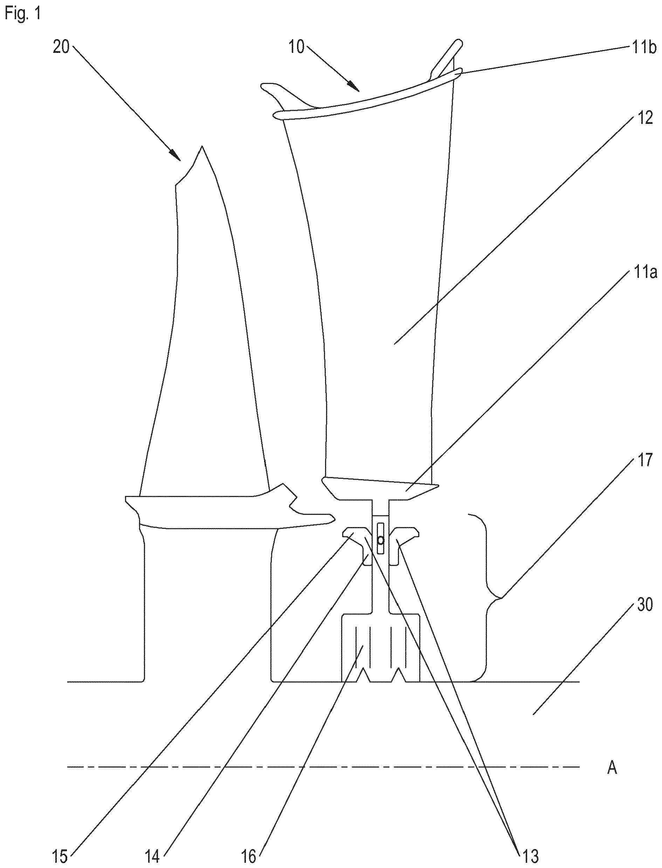

In der Figur 1 ist schematisch eine Anordnung einer Leitschaufel 10 und einer exemplarischen, axial benachbarten Laufschaufel 20 in einer Schnittdarstellung gezeigt, wobei ein Meridianschnitt dargestellt ist, d.h. eine Schnittebene, die die Maschinen- bzw. Rotationsachse A der Strömungsmaschine umfasst.

Die Laufschaufel 20 ist mit einer Rotorwelle 30 verbunden und dazu eingerichtet, mit der Rotorwelle 30 um deren Rotationsachse A zu rotieren. Diese Rotationsachse A ist zudem eine zentrale Achse der gezeigten Anordnung, bezüglich der die Laufschaufel 20 und die Leitschaufel 10 im Wesentlichen radial ausgerichtet sind. Die Richtung eines vorgesehenen Hauptstroms verläuft in der Darstellung der Figur 1 von links nach rechts.

Die Leitschaufel 10 weist eine radial innere Deckplatte 11a, eine radial äußere Deckplatte 11b, sowie ein dazwischen liegendes Schaufelblatt 12 auf. An der radial inneren Deckplatte 11a ist eine Dichtung 17 vorzugsweise so angebunden, insbesondere speichenzentriert aufgehängt, dass sie sich in radialer Richtung (also senkrecht zur Rotationsachse A) unabhängig von einem Leitschaufelkranz, der aus einer Vielzahl von in Umfangsrichtung benachbarten Leitschaufeln 12 gebildet ist, thermisch ausdehnen kann.

Die Dichtung 17 umfasst einen der Rotorwelle 30 zugewandten Bürsten- oder Einlaufbelagdichtring 16 zur Reduktion einer Leckage durch einen Umfangsspalt zwischen dem Leitschaufelkranz und der Rotorwelle. Darüber hinaus weist die Dichtung zwei Dichtringe 13 auf, die in radialer Richtung zwischen dem Bürsten- bzw. Einlaufbelagdichtring 16 und der radial inneren Deckplatte 11a angeordnet sind und um die Rotorwelle herum verlaufen. In der Schnittdarstellung der Figur 1 ist jeweils ein Befestigungsmittel 14 in Form eines Befestigungsrandes und ein sich im Wesentlichen in axialer Richtung erstreckender Ringteil 15 eines jeweiligen Dichtrings 13 zu erkennen; im vorliegenden Beispiel verläuft der Ringteil 15 im Wesentlichen zylindrisch um seine zentrale Achse (die mit der Rotationsachse A der Rotorwelle übereinstimmt), alternativ könnte der Ringteil beispielsweise konisch (mit derselben Achse) verlaufen oder mindestens einen konischen und/oder mindestens einen zylindrischen Abschnitt aufweisen.

Die Ringteile 15 der beiden Dichtringe 13 bilden zusammen mit der radial inneren Deckplatte 11a der Leitschaufel 10 und einem axialen Vorsprung einer radial inneren Deckplatte einer jeweils der Leitschaufel 10 axial benachbarten Laufschaufel, von denen in Fig. 1 nur eine stromaufwärtige (links in Fig. 1) Laufschaufel 20 dargestellt ist, eine Art Labyrinthdichtung. Sie dient dazu, eine unerwünschte Luftströmung in radialer Richtung im Bereich zwischen den radial inneren Enden der Leitschaufel 10 und der jeweils benachbarten Laufschaufel 20 zu reduzieren. Handelt es sich bei der Laufschaufel 20 und der Leitschaufel 10 um Turbinenschaufeln der Strömungsmaschine, so verhindert die Labyrinthdichtung insbesondere einen Heißgaseinzug aus dem Heißgaskanal nach radial innen zur Rotorwelle 30 hin.

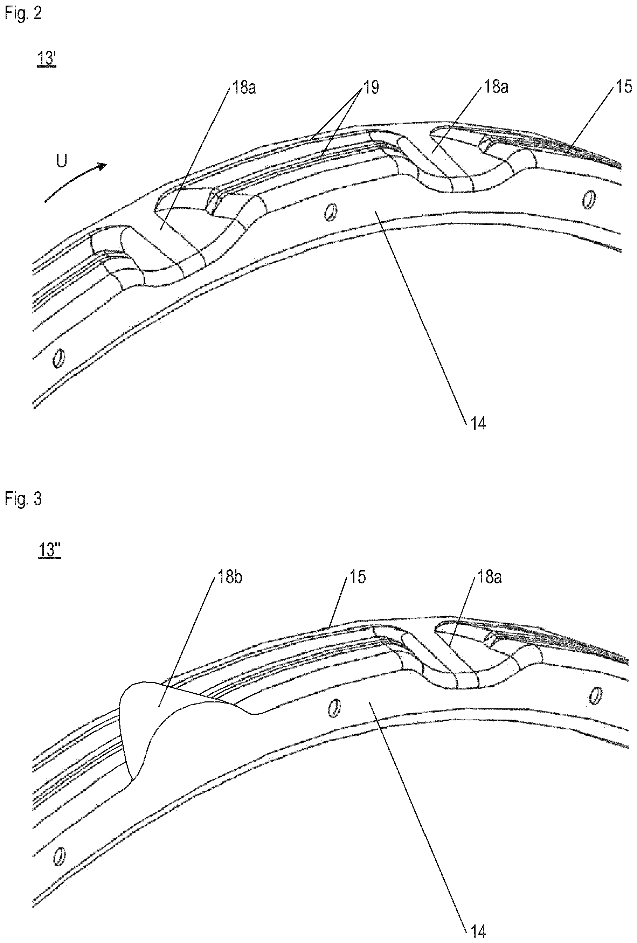

In der Figur 1 nicht genauer zu erkennen ist die Mehrzahl an Versteifungen, die in Umfangsrichtung an einem erfindungsgemäßen Dichtring angeordnet sind; dies ist in den Figuren 2 und 3 zu sehen, die jeweils einen Abschnitt eines jeweiligen erfindungsgemäßen Dichtrings 13' bzw. 13" zeigen:

Der in der Figur 2 dargestellte Dichtring 13' weist ein Befestigungsmittel 14 in Form eines Befestigungsrandes, sowie einen davon abgewinkelten, sich in im Wesentlichen axialer Richtung erstreckenden Ringteil 15 auf. In Figur 2 blickt man dabei auf die Fläche des Befestigungsmittels 14, welche im montierten Zustand an einer entsprechenden Gegenbefestigungsfläche insbesondere eines radialen Vorsprungs des Bürsten- oder Einlaufbelagdichtrings anliegt. In die Bildebene von Figur 2 nach hinten erstreckt sich von dort aus der Ringteil 15. In dem Befestigungsrand ist eine Mehrzahl an in Umfangsrichtung voneinander beabstandeten Löchern vorgesehen, wobei die Löcher der Befestigung des Dichtrings 13' an dem Bürsten- bzw. Einlaufbelagdichtring 16 dienen, bzw. der mittelbaren oder unmittelbaren Befestigung an den Leitschaufeln 10 bzw. Leitschaufelsegmenten, die einen Leitschaufelkranz bilden. Insbesondere kann sich im montierten Zustand des Dichtrings 13' ein Bolzen oder dergleichen durch ein jeweiliges Loch im Dichtring 13' in axialer Richtung erstrecken, wobei der Bolzen wenigstens ein weiteres Loch durchdringt, welches in dem Bürsten- bzw. Einlaufbelagdichtring vorgesehen ist. Ferner kann der Bolzen einen nicht dargestellten Gleitstein oder dergleichen durchdringen, welcher zwischen zwei radial nach innen weisenden Vorsprüngen (auch "Tang" genannt) an der Leitschaufel 10 bzw. einem Leitschaufelsegment in radialer Richtung beweglich zu der Leitschaufel 10 bzw. dem Leitschaufelsegment aufgenommen ist, um auf diese Weise eine Speichenzentrierung zu bewirken.

Der Ringteil 15 des in der Figur 2 gezeigten Dichtrings weist umlaufende Rillen 19 sowie eine Mehrzahl von Versteifungen 18a auf (von denen in dem dargestellten Abschnitt zwei zu sehen sind), die in Umfangsrichtung U aufeinanderfolgend angeordnet sind. Die Versteifungen 18a sind dabei im gezeigten Beispiel als Vertiefungen, die sich nach radial innen erstrecken, ausgebildet, deren Randflächen gewölbt sind. In axialer Richtung vom Befestigungsrand 14 ausgehend verjüngen sich die Versteifungen 18a. Der freie Rand des Ringteils 15 ist kreisförmig ausgebildet und weist keine radiale Vertiefungen oder Erhöhungen auf. Dies ist vorteilhaft, damit ein über den gesamten Umfang hinweg gleichförmiger Dichtspalt zwischen dem freien Rand des Ringteils 15 und dem axialen Vorsprung der axial benachbarten Laufschaufel besteht.

Im Wesentlichen sind die Versteifungen 18a in dem gezeigten Ausführungsbeispiel gemäß einem Rotationsparaboloid ausgebildet, wobei zudem die Übergänge zwischen den Versteifungen und einer im Wesentlichen zylindrischen Fläche des Ringteils 15 abgerundet sind. Dies muss aber keineswegs so ein. Beispielsweise können die Versteifungen 18a auch ebene Flächenabschnitte aufweisen.

In Figur 3 ist ein erfindungsgemäßer Dichtring 13" dargestellt, der wie der in Figur 2 gezeigte Dichtring 13' ein Befestigungsmittel 14 in Form eines Befestigungsrandes, sowie einen davon abgewinkelten, sich im Wesentlichen in axialer Richtung erstreckenden Ringteil 15 aufweist.

Der Ringteil 15 des Dichtrings 13" weist dabei verschiedene Typen von Versteifungen auf, von denen zwei in der Figur 3 gezeigt sind. Die Versteifung 18a ist wie mit Bezug zur Figur 2 beschrieben als radiale Senke bzw. Vertiefung geformt, die in mehrere Richtungen gewölbt (und in diesem Ausführungsbeispiel im Wesentlichen wie ein Rotationsparaboloid geformt) ist und die ausgehend vom Befestigungsrand 14 in axialer Richtung enger wird (sich also verjüngt). Demgegenüber ist die Versteifung 18b als radiale Erhebung ausgebildet, die sich also nach radial außen erstreckt. Sie ist im Wesentlichen konisch geformt, wobei eine zugehörige Kegelachse parallel zu einer (nicht gezeigten) zentralen Achse des Dichtrings, welche der Rotationsachse A entspricht (siehe Figur 1), verläuft. Auch die Versteifung 18b verjüngt sich ausgehend vom Befestigungsrand 14 in axialer Richtung.

Vorzugsweise sind die Versteifungen 18a, 18b in regelmäßigen Abständen in Umfangsrichtung um den Dichtring 13" herum angeordnet, wobei sich die verschiedenen Typen beispielsweise abwechseln können.

Offenbart ist ein Dichtring 13, 13', 13" für eine Strömungsmaschine, der dazu eingerichtet ist, eine Rotorwelle 30 umlaufend jeweils an einem radial inneren Bereich einer Mehrzahl von Leitschaufeln 20 befestigt zu werden. Der Dichtring umfasst einen sich in axialer Richtung erstreckenden Ringteil 15, der eine Mehrzahl an in Umfangsrichtung U aufeinanderfolgenden Versteifungen 18a, 18b aufweist.

Offenbart sind ferner eine Dichtung 17 für eine Strömungsmaschine, die einen derartigen Dichtring 13, 13', 13" sowie einen einer Rotorwelle 30 zuzuwendenden Bürsten- und/oder Einlaufbelagdichtring 16 umfasst, und ein Verfahren zum Herstellen eines Dichtrings.

### Bezugszeichen

- 10: Leitschaufel
- 11a, 11b: Deckplatte
- 12: Leitschaufelblatt
- 13, 13', 13": Dichtring
- 14: Befestigungsmittel
- 15: Ringteil
- 16: Bürsten- oder Einlaufbelagdichtring
- 17: Dichtung
- 18a, 18b: Versteifung
- 19: Rille

- 20: Laufschaufel
- 30: Rotorwelle

- A: Rotationsachse
- U: Umfangsrichtung

## Patentansprüche

1. Dichtring (13, 13', 13") für eine Strömungsmaschine, der dazu eingerichtet ist, eine Rotorwelle (30) umlaufend jeweils an einem radial inneren Bereich einer Mehrzahl von Leitschaufeln (10) befestigt zu werden, wobei der Dichtring einen sich im Wesentlichen in axialer Richtung erstreckenden Ringteil (15) umfasst, **dadurch gekennzeichnet, dass** der Ringteil (15) eine Mehrzahl an in Umfangsrichtung (U) aufeinanderfolgenden Versteifungen (18a, 18b) aufweist, wobei mindestens ein Teil der Versteifungen oder alle Versteifungen jeweils im Wesentlichen entlang einer Kegelfläche (18b) und/oder einer Oberfläche eines Rotationsparaboloids (18a) ausgebildet sind.

2. Dichtring gemäß Anspruch 1, wobei die Versteifungen (18a, 18b) gleichmäßig an dem sich in axialer Richtung erstreckenden Ringteil (15) verteilt sind.

3. Dichtring gemäß einem der Ansprüche 1 oder 2, wobei die Versteifungen radiale Senken (18a) und/oder radiale Erhebungen (18b) umfassen.

4. Dichtring gemäß einem der Ansprüche 1 bis 3, wobei sich die Versteifungen von einem Befestigungsmittel (14) des Dichtrings ausgehend in axialer Richtung verjüngen.

5. Dichtung (17) für eine Strömungsmaschine, die dazu eingerichtet ist, eine Rotorwelle (30) umlaufend an einem radial inneren Bereich einer Mehrzahl von Leitschaufeln (10) befestigt zu werden, wobei die Dichtung mindestens einen Dichtring (13, 13', 13") gemäß einem der Ansprüche 1 bis 4 und einen der Rotorwelle zuzuwendenden Bürsten- und/oder Einlaufbelagdichtring (16) umfasst.

6. Strömungsmaschine mit einer Rotorwelle, einer Mehrzahl von Leitschaufeln (10), die zusammen einen Leitschaufelkranz einer Turbinen- oder Verdichterstufe bilden, und einer Dichtung (17) nach Anspruch 5, wobei die Dichtung (17) zusammen mit dem mindestens einen Dichtring (13, 13', 13") an dem radial inneren Bereich der Mehrzahl von Leitschaufeln befestigt ist.

7. Strömungsmaschine nach Anspruch 6, ferner umfassend einen dem Leitschaufelkranz axial benachbarten Laufschaufelkranz mit einer Mehrzahl von Laufschaufeln (20), wobei die Leitschaufeln (10) jeweils eine radial innere Deckplatte (11a) umfassen und die Laufschaufeln (20) jeweils an einem radial inneren Bereich einen axialen Vorsprung umfassen, welcher zu dem Leitschaufelkranz hinweist, wobei der sich in axialer Richtung erstreckende Ringteil (15) des Dichtrings (13, 13', 13") zusammen mit den radial inneren Deckplatten (11a) der Leitschaufeln (10) und den axialen Vorsprüngen der Laufschaufeln (20) eine Labyrinthdichtung bildet.

8. Strömungsmaschine nach Anspruch 7, wobei die axialen Vorsprünge der Laufschaufel (20) in radialer Richtung zwischen den radial inneren Deckplatten (11a) der Leitschaufeln (10) und dem Ringteil (15) des Dichtrings (13, 13', 13") angeordnet sind.

9. Strömungsmaschine nach Anspruch 7 oder 8, wobei der Leitschaufelkranz zwei Dichtringe (13, 13', 13") umfasst, wobei einer der beiden Dichtringe (13, 13', 13") eine Labyrinthdichtung mit einem stromaufwärtigen Laufschaufelkranz und der andere der beiden Dichtringe (13, 13', 13") eine Labyrinthdichtung mit einem stromabwärtigen Laufschaufelkranz bildet.

10. Verfahren zum Herstellen eines Dichtrings (13, 13', 13"), welcher nach einem der Ansprüche 1-4 ausgebildet ist, wobei das Verfahren ein Fertigen einer Rohform für den Dichtring mit einem Befestigungsmittel (14) und einem sich axial erstreckenden Ringteil (15) umfasst, sowie ein Ausbilden einer Mehrzahl von Versteifungen (18a, 18b) in dem sich axial erstreckenden Ringteil (15), wobei die Versteifungen in Umfangsrichtung (U) aufeinanderfolgend angeordnet sind, wobei wenigstens eine der Versteifungen in axialer Richtung jeweils im Wesentlichen entlang einer Kegelfläche ausgebildet wird, und/oder wobei wenigstens eine der Versteifungen in axialer Richtung jeweils im Wesentlichen entlang einer Oberfläche eines Rotationsparaboloids ausgebildet wird.

11. Verfahren gemäß Anspruch 10, wobei die Versteifungen (18a, 18b) gleichmäßig an dem sich axial erstreckenden Ringteil (15) der Rohform verteilt ausgebildet werden.

12. Verfahren gemäß einem der Ansprüche 10 oder 11, wobei ein Teil der Versteifungen (18a, 18b) als radiale Senken (18a) in die Außenfläche eingeprägt und/oder als radiale Erhebungen (18b) ausgeformt werden.

13. Verfahren gemäß einem der Ansprüche 10 bis 12, wobei die Versteifungen sich in axialer Richtung von dem Befestigungsrand (14) ausgehend konisch und/oder parabolisch verjüngend ausgebildet werden.

## Claims

1. Sealing ring (13, 13', 13") for a turbomachine, which ring is designed to be fastened in each case to a radially inner region of a plurality of guide vanes (10) so as to rotate around a rotor shaft (30), the sealing ring comprising a ring part (15) which extends substantially in the axial direction, **characterized in that** the ring part (15) has a plurality of stiffeners (18a, 18b) which follow on from one another in the circumferential direction (U), at least some of the stiffeners or all of the stiffeners being formed substantially along a conical surface (18b) and/or a surface of a paraboloid of revolution (18a) in each case.

2. Sealing ring according to claim 1, wherein the stiffeners (18a, 18b) are evenly distributed on the ring part (15) which extends in the axial direction.

3. Sealing ring according to either claim 1 or claim 2, wherein the stiffeners comprise radial indentations (18a) and/or radial projections (18b).

4. Sealing ring according to any of claims 1 to 3, wherein the stiffeners taper in the axial direction starting from a fastening means (14) of the sealing ring.

5. Seal (17) for a turbomachine, which seal is designed to be fastened to a radially inner region of a plurality of guide vanes (10) so as to rotate around a rotor shaft (30), wherein the seal comprises at least one sealing ring (13, 13', 13") according to any of claims 1 to 4 and a brush and/or inlet lining sealing ring (16) to be turned toward the rotor shaft.

6. Turbomachine comprising a rotor shaft, a plurality of guide vanes (10), which together form a guide vane ring of a turbine or compressor stage, and a seal (17) according to claim 5, wherein the seal (17) together with the at least one sealing ring (13, 13', 13") is fastened to the radially inner region of the plurality of guide vanes.

7. Turbomachine according to claim 6, further comprising a rotor blade ring which has a plurality of rotor blades (20) and is axially adjacent to the guide vane ring, wherein the guide vanes (10) each comprise a radially inner cover plate (11a) and the rotor blades (20) each comprise an axial projection on a radially inner region, which projection points toward the guide vane ring, wherein the ring part (15) of the sealing ring (13, 13', 13") which extends in the axial direction forms a labyrinth seal together with the radially inner cover plates (11a) of the guide vanes (10) and the axial projections of the rotor blades (20).

8. Turbomachine according to claim 7, wherein the axial projections of the rotor blade (20) are arranged in the radial direction between the radially inner cover plates (11a) of the guide vanes (10) and the ring part (15) of the sealing ring (13, 13', 13").

9. Turbomachine according to either claim 7 or claim 8, wherein the guide vane ring comprises two sealing rings (13, 13', 13"), wherein one of the two sealing rings (13, 13', 13") forms a labyrinth seal with an upstream rotor blade ring and the other of the two sealing rings (13, 13', 13") forms a labyrinth seal with a downstream rotor blade ring.

10. Method for producing a sealing ring (13, 13', 13") which is designed according to any of claims 1-4, wherein the method comprises manufacturing a raw form for the sealing ring having a fastening means (14) and an axially extending ring part (15), and forming a plurality of stiffeners (18a, 18b) in the axially extending ring part (15), wherein the stiffeners are arranged so as to follow on from one another in the circumferential direction (U), wherein at least one of the stiffeners is formed substantially along a conical surface in the axial direction in each case, and/or wherein at least one of the stiffeners is formed substantially along a surface of a paraboloid of revolution in the axial direction in each case.

11. Method according to claim 10, wherein the stiffeners (18a, 18b) are evenly distributed on the axially extending ring part (15) of the raw form.

12. Method according to either claim 10 or claim 11, wherein some of the stiffeners (18a, 18b) are impressed as radial indentations (18a) into the outer surface and/or are molded as radial elevations (18b).

13. Method according to any of claims 10 to 12, wherein the stiffeners are tapered conically and/or parabolically in the axial direction starting from the fastening edge (14).

## Revendications

1. Bague d'étanchéité (13, 13', 13") pour une turbomachine, laquelle bague d'étanchéité est conçue pour être fixée, circonférentiellement par rapport à un arbre de rotor (30), respectivement à une zone radialement intérieure d'une pluralité d'aubes directrices (10), la bague d'étanchéité comprenant une partie de bague (15) s'étendant sensiblement dans la direction axiale, **caractérisée en ce que** la partie de bague (15) comporte une pluralité de raidisseurs (18a, 18b) en série dans la direction circonférentielle (U), au moins une partie des raidisseurs ou tous les raidisseurs étant réalisés respectivement sensiblement le long d'une surface conique (18b) et/ou d'une surface d'un paraboloïde de révolution (18a).

2. Bague d'étanchéité selon la revendication 1, dans laquelle les raidisseurs (18a, 18b) sont répartis uniformément sur la partie de bague (15) s'étendant dans la direction axiale.

3. Bague d'étanchéité selon l'une des revendications 1 ou 2, dans laquelle les raidisseurs comprennent des dépressions radiales (18a) et/ou des élévations radiales (18b).

4. Bague d'étanchéité selon l'une des revendications 1 à 3, dans laquelle les raidisseurs se rétrécissent dans la direction axiale à partir d'un moyen de fixation (14) de la bague d'étanchéité.

5. Joint d'étanchéité (17) pour une turbomachine, lequel joint d'étanchéité est conçu pour être fixé, circonférentiellement par rapport à un arbre de rotor (30), à une zone radialement intérieure d'une pluralité d'aubes directrices (10), le joint d'étanchéité comprenant au moins une bague d'étanchéité (13, 13', 13") selon l'une des revendications 1 à 4 et une bague d'étanchéité à brosse et/ou à revêtement de rodage (16) à orienter vers l'arbre de rotor.

6. Turbomachine comprenant un arbre de rotor, une pluralité d'aubes directrices (10) qui forment ensemble une couronne d'aubes directrices d'un étage de turbine ou de compresseur, et un joint d'étanchéité (17) selon la revendication 5, le joint d'étanchéité (17) étant fixé, conjointement avec l'au moins une bague d'étanchéité (13, 13', 13"), à la zone radialement intérieure de la pluralité d'aubes directrices.

7. Turbomachine selon la revendication 6, comprenant en outre une couronne d'aubes mobiles axialement adjacente à la couronne d'aubes directrices comportant une pluralité d'aubes mobiles (20), les aubes directrices (10) comprenant chacune une plaque de recouvrement radialement intérieure (11a), et les aubes mobiles (20) comprenant une saillie axiale respectivement au niveau d'une zone radialement intérieure, laquelle saillie axiale est orientée vers la couronne d'aubes directrices, la partie de bague (15) qui s'étend dans la direction axiale de la bague d'étanchéité (13, 13', 13") formant, conjointement avec les plaques de recouvrement (11a) radialement intérieures des aubes directrices (10) et les saillies axiales des aubes mobiles (20), un joint d'étanchéité à labyrinthe.

8. Turbomachine selon la revendication 7, dans laquelle les saillies axiales de l'aube mobile (20) sont disposées dans la direction radiale entre les plaques de recouvrement (11a) radialement intérieures des aubes directrices (10) et la partie de bague (15) de la bague d'étanchéité (13, 13', 13").

9. Turbomachine selon la revendication 7 ou 8, dans laquelle la couronne d'aubes mobiles comprend deux bagues d'étanchéité (13, 13', 13"), l'une des deux bagues d'étanchéité (13, 13', 13") formant un joint d'étanchéité à labyrinthe avec une couronne d'aubes mobiles en amont, et l'autre bague d'étanchéité (13, 13', 13") formant un joint d'étanchéité à labyrinthe avec une couronne d'aubes mobiles en aval.

10. Procédé de fabrication d'une bague d'étanchéité (13, 13', 13") réalisée selon l'une des revendications 1 à 4, le procédé consistant à fabriquer un moule d'ébauche pour la bague d'étanchéité comportant un moyen de fixation (14) et une partie de bague (15) s'étendant axialement, et à former une pluralité de raidisseurs (18a, 18b) dans la partie de bague (15) s'étendant axialement, les raidisseurs étant disposés en série dans la direction circonférentielle (U), au moins l'un des raidisseurs dans la direction axiale étant formé respectivement sensiblement le long d'une surface conique, et/ou au moins l'un des raidisseurs dans la direction axiale étant formé respectivement sensiblement le long d'une surface d'un paraboloïde de révolution.

11. Procédé selon la revendication 10, dans lequel les raidisseurs (18a, 18b) sont répartis uniformément sur la partie de bague (15) du moule d'ébauche s'étendant axialement.

12. Procédé selon l'une des revendications 10 ou 11, dans lequel une partie des raidisseurs (18a, 18b) est gravée sous la forme de dépressions radiales (18a) dans la surface extérieure et/ou est réalisée sous la forme d'élévations radiales (18b).

13. Procédé selon l'une des revendications 10 à 12, dans lequel les raidisseurs sont réalisés de manière à rétrécir coniquement et/ou paraboliquement dans la direction axiale à partir du bord de fixation (14).
